# EUROPEAN PATENT SPECIFICATION

(11) **EP 3 660 301 B1**
(45) Date of publication and mention of the grant of the patent: **11.01.2023**
(21) Application number: 18380018.4
(22) Date of filing: 28.11.2018
(51) Int. Cl.: F03D 80/50, F03D 1/06

(54) **WIND TURBINE HUB**
WINDTURBINENNABE
MOYEU D'ÉOLIENNE

(43) Date of publication of application: 03.06.2020
(73) Proprietor: Siemens Gamesa Renewable Energy Innovation & Technology, S.L., 31621 Sarriguren Navarra (ES)
(72) Inventor: Bienes Archel, Carlos, 31621 Sarriguren (ES)
(74) Representative: SGRE-Association

(56) References cited:
- WO-A2-2009/156243
- DE-A1-102009 035 248
- DE-B4-102009 035 248
- US-A1- 2010 129 216
- US-A1- 2012 014 775

## Description

The invention describes a wind turbine hub; a method of operating an access hatch of a wind turbine hub; and a wind turbine.

It is usually necessary to perform maintenance or repair work to components of a wind turbine. Even with appropriate safety measures in place, such service procedures can be hazardous and it may be that a person sustains injury. When the injured person is located in the interior cavity of the wind turbine hub, rescue can be time-consuming and difficult. In prior art wind turbine designs, the injured person may need to be transferred to the nacelle. From there, the injured person can be transferred to a heli-hoist platform or can be lowered through the tower interior. These manoeuvres can add to the severity of the injury, particularly in the case of head or spinal injuries which are time-critical and generally require that the injured person is moved as little as possible. In some designs, the hub includes a hatch to the outside. However, if the hatch is not already in a suitable position through which the injured person can be moved, it may not be possible to turn the rotor without risking further injury to the patient. WO2009156243A2 describes an alternative approach in which a three-part cover is provided for an aperture at the front of the hub or spinner. Each of the three aperture covers is connected to the rim of the aperture by a hinge. To open the aperture, various fittings are released to unlock the aperture covers, and the aperture covers are turned inwards. A significant drawback of this design is that the size of the aperture is limited by the available space inside the hub, since turning the aperture covers to open the aperture requires sufficient room inside the hub. Furthermore, the curved shape of the aperture covers and the large hinges may present a hindrance during an emergency rescue operation.

It is therefore an object of the invention to provide an improved way of transferring an injured person from a wind turbine hub.

This object is achieved by the wind turbine hub of claim 1; by the method of claim 11 of operating an access hatch of a wind turbine hub; and by the wind turbine of claim 13.

According to the invention, the wind turbine hub comprises a main body portion realised for connection to a plurality of rotor blades and comprising an interior cavity dimensioned to accommodate service personnel; a removable access hatch arranged at the front of the hub, i.e. upwind of the main body portion; and a locking arrangement realised to lock the access hatch in place on the hub and to release the access hatch from its locked state to expose an access opening at the front of the hub; and wherein the access hatch and locking arrangement are constructed to allow the released access hatch to be moved into the interior cavity of the main body portion. This last feature shall be understood to mean that the access hatch can only be moved in one principle direction, namely into the hub interior, and that it cannot be moved to the hub exterior.

An advantage of the inventive wind turbine hub is that the locking arrangement can quickly and safely provide an access opening to the exterior. By providing an access opening directly from the hub, the time taken to transfer an injured person out of the hub can be significantly reduced. In addition, because the access hatch can simply be detached from the hub to reveal the access opening, there is no need to turn the aerodynamic rotor into a specific positon, as would be the case with a prior art hinged access hatch. Furthermore, since the access hatch is detached and then moved into the interior cavity of the hub, there is no danger of the access hatch falling outside the hub.

According to the invention, the method of operating an access hatch of such a wind turbine hub comprises the steps of actuating the locking arrangement to release the access hatch from its locked state to expose an access opening at the front of the hub, and subsequently moving the released access hatch into the interior cavity of the main body portion; or positioning the access hatch to close the access opening at the front of the hub and subsequently actuating the locking arrangement to lock the access hatch in place on the hub.

An advantage of the inventive method is that the time taken to transfer an injured person out of the hub interior can be significantly reduced. It is no longer necessary to transfer the injured person into the nacelle, so valuable time can be saved. Not having to transfer the injured person from the hub to the nacelle also means that the person need not be moved about unnecessarily. It is particularly important to reduce the rescue time in case of head or spinal injuries. Equally, for this type of injury, it is important not to move the patient unnecessarily.

According to the invention, the wind turbine comprises - amongst other relevant components - an aerodynamic rotor, which aerodynamic rotor comprises a number of rotor blades mounted to an embodiment of the inventive wind turbine hub.

In the following, it may be assumed that the wind turbine hub is part of an aerodynamic rotor comprising three rotor blades mounted to the hub, for example by means of pitch bearings. To this end, the hub may be assumed to comprise an inner framework to provide the necessary structural stability, particularly in the case of very long rotor blades, and an outer housing with a smooth outer surface. The housing is generally referred to as the "spinner". The housing may be assumed to terminate as a rounded cone or nose at the front of the hub. The access hatch is arranged at the front of the hub and therefore comprises at least a portion of the spinner "nose". In the following, without restricting the invention in any way, it may be assumed that the access hatch has a rounded conical shape, i.e. the access hatch is bowl-shaped or calotte-shaped.

The nose of the hub may be described as being "upwind" of the rest of the hub, since the hub of a wind turbine is generally pointed to face into the wind. Similarly, anything located behind the nose may be described as being "downwind" of the nose.

Since the purpose of the locking arrangement is to lock the access hatch in place but also to allow the access hatch to be removed, the locking arrangement may equally well be referred to as a release mechanism, a locking mechanism, a lock/release mechanism, etc. in the following.

The removable access hatch is preferably realised as the foremost portion of the wind turbine hub, i.e. the most upwind portion of the wind turbine hub with respect to a rotational axis of the hub and assuming the hub is facing into the wind.

The diameter of the access opening is preferably at least 50 cm, more preferably at least 60 cm. An access opening with such a minimum diameter should be sufficient to allow an injured person to be transferred out of the hub. Of course, a larger diameter is possible, for example a diameter of about 1.0 m.

According to the invention, the locking arrangement comprises a first annular structure arranged about the access hatch, and a second, complementary inward-facing annular structure arranged on the main body portion. These annular structures may be regarded as collars or flanges, and are preferably realised to match each other in width and size. The annular structures may be made of any suitable material such as injection-moulded plastic, and are preferably flexible to some extent.

Being in the form of a collar or flange, such an annular structure comprises an outer diameter and a smaller inner diameter. Preferably, the outer diameter of the first annular structure exceeds the diameter of the access opening. In this way, the access hatch cannot fall out after being released from the main body portion of the hub. The first annular structure may be referred to as the inner collar in the following, and the second annular structure may be referred to as the outer collar.

In a preferred embodiment of the invention, the locking arrangement is accessible from the interior cavity. This means that the locking arrangement can be operated by a person inside the hub. In a further preferred embodiment of the invention, the access hatch is equipped with one or more handles so that the operator can easily grasp these to draw the access hatch backwards into the hub interior, where it can be safely stowed, for example during a rescue operation.

There are various ways of obtaining a suitable locking arrangement that can be opened from within, preferably by a single person and requiring at most a simple tool, and which will allow the access hatch to be detached and moved into the hub interior. Another design consideration is that a watertight seal should be provided about the access opening.

According to the invention, the locking arrangement comprises a number of two-part locking devices, wherein the first part of a locking device is permanently mounted to the inner collar, for example by riveting. Similarly, the second part of the locking device is permanently mounted to the outer collar. In such an embodiment, a two-part locking device comprises a release mechanism that can be opened to release the first part from the second part, so that the inner collar can be detached from the outer collar (allowing the access hatch to be drawn into the hub interior). Similarly, the release mechanism can be closed to lock the first part to the second part (effectively securing the access hatch in place at the front of the hub).

There are various ways of designing a release mechanism for connecting the inner and outer collars. A release mechanism can be constructed in any suitable manner, for example to function as a latch. In a particularly preferred embodiment of the invention, the release mechanism comprises a moveable hook arranged in the first part to engage a pin positioned in the second part. Preferably, the release mechanism is easily actuated, for example by a simple hand-held Allen key. In such an embodiment, the hook may be provide with a hex socket, and the hook can be moved by an Allen key inserted into the hex socket.

Because of the ease with which each lock feature pair can be opened, the access hatch can be released very quickly. The access hatch can then be lifted into the hub interior, where it can rest against a side wall or be suspended from a suitable hook arrangement, for example.

Preferably, the locking arrangement comprises at least three such release mechanisms, preferably at least six such release mechanisms arranged equidistantly about the access hatch.

In an alternative embodiment of the invention, a release mechanism can comprise a recessed portion formed in the outer collar, and a complementary projecting portion formed in the inner collar and shaped to fit inside the recessed portion. The recessed portion may be regarded as a "shoe", while the complementary projecting portion may be regarded as a "foot". These features are preferably secured to each other in such a way that the inner collar will not detach from the outer collar, i.e. the access hatch will not detach, unless a person deliberately opens the release mechanism. In such an embodiment, the means of engaging the first and second lock features may comprise a rotatable bar shaped to lock the projecting portion in the recessed portion. A person inside the hub can turn each rotatable bar by the required amount (e.g. a quarter turn) to open (or close) the release mechanisms. In this embodiment, actuating the locking arrangement can be performed manually by a single person without the need for any tools.

The wind turbine spinner can be designed so that it comprises a main body portion and the access hatch. In such an embodiment, the second annular structure or outer collar is formed about a circular opening at the front of the main body portion. Alternatively, a wind turbine spinner can be designed to comprise a main body portion and a two-part nose or front portion. In such an embodiment, the two-part nose comprises the circular access hatch and an annular adapter realised for mounting between the access hatch and the main body portion. In this case, the second annular structure or collar is formed about a circular opening at the front or upwind end of the annular adapter. The downwind end is designed to attach to a corresponding opening at the front of the main body portion. The advantage of this design is that a single access hatch design can be used with different spinner designs, simply by providing appropriate annular adapters. Equally, a simple nose without any other function can be replaced by a nose that also serves as an access hatch.

In a preferred embodiment of the invention, the wind turbine hub is designed and constructed to accommodate a rescue arrangement, which rescue arrangement can be temporarily or permanently installed in the interior cavity of the hub, and comprises a means of moving a horizontal stretcher through the access opening; a hoist rope adapted for connection to the stretcher; and a winch configured to lower the stretcher to a level below the hub, e.g. towards ground level or to the deck of a waiting marine vessel. Equally, a rescue arrangement may be realised to transfer a stretcher outwards from the access opening, for example using a pair of rails or similar, so that a helicopter can connect to the stretcher. Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig 1 shows a cross-section through an embodiment of the inventive wind turbine hub;
Fig 2 shows a front view of the wind turbine hub of Fig 1;
Fig 3 shows a simplified cross-section through the upwind portion of a further embodiment of the inventive wind turbine hub;
Fig 4 shows an embodiment of an inner collar about an access hatch in an embodiment of the inventive wind turbine hub;
Fig 5 shows a cutaway view through mated inner and outer collars in an embodiment of the inventive wind turbine hub;
Figs 6 and 7 show an alternative realisation of a locking arrangement;
Fig 8 shows a stage during a rescue procedure carried out in an embodiment of the inventive wind turbine hub;
Fig 9 shows a release mechanism as used in Figs 4 and 5.

In the diagrams, like numbers refer to like objects throughout. Objects in the diagrams are not necessarily drawn to scale.

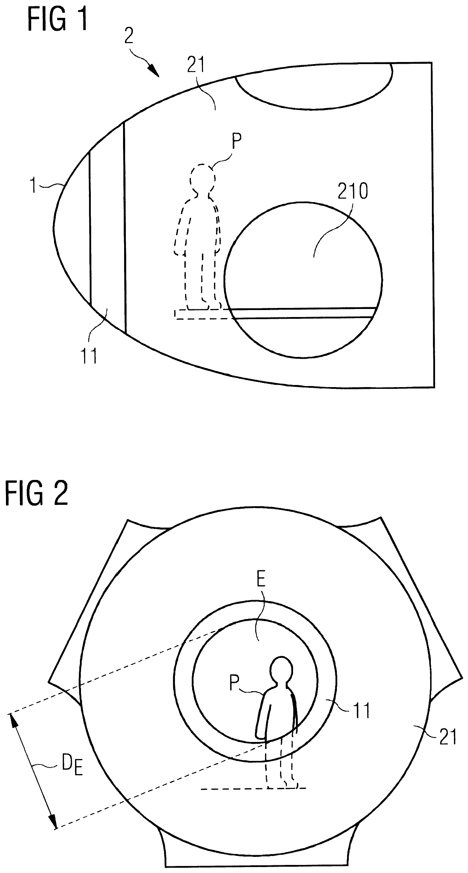

Fig 1 shows an embodiment of the inventive wind turbine hub 2. Maintenance work can be carried out by service personnel P in the interior cavity 210 of the hub 2. The hub 2 comprises a main portion 21 and a two-part nose or front portion 1, 11. The two-part front portion 1, 11 comprises an annular ring 11 that is fixed relative to the main portion 21, and a removable access hatch 1. Fig 2 shows a front view of the same wind turbine hub 2 after release of the removable access hatch 1, giving a view through an access opening E (with diameter D_{E}) into the interior 210 of the hub 2. The removable access hatch 1 may be assumed to be stowed in the interior 210 of the hub 2.

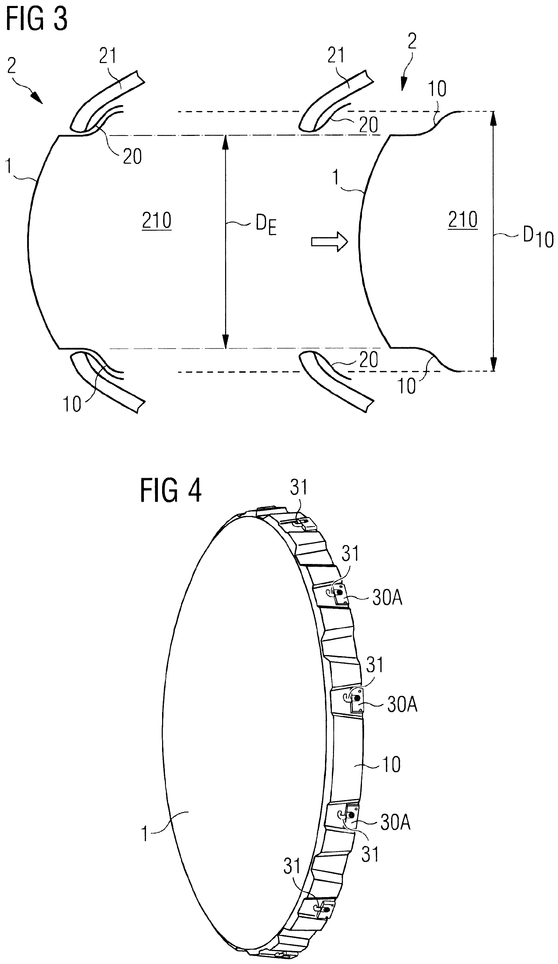

Fig 3 shows a simplified cross-section through the upwind portion of an alternative embodiment of the inventive wind turbine hub 2, showing the wind turbine hub 2 in its "closed" state (on the left-hand side) and in its "open" state (on the right-hand side). On the left-hand side, the diagram shows an upwind removable access hatch 1 connected to the downwind hub portion 21 by means of complementary annular structures 10, 20 in the form of flanges or collars, and a lock/release mechanism (not shown). The diagram serves to illustrate the inward displacement of the removable access hatch 1 into the interior cavity 210 of the hub 2 in the direction indicated by the arrow. This is facilitated by the orientation of the annular collars 10, 20. By releasing the removable access hatch 1 and pulling it into the interior cavity 210, an access opening E with a diameter D_{E} is revealed. An injured person can be placed on a stretcher and comfortably transferred through the exit opening from the hub to the outside.

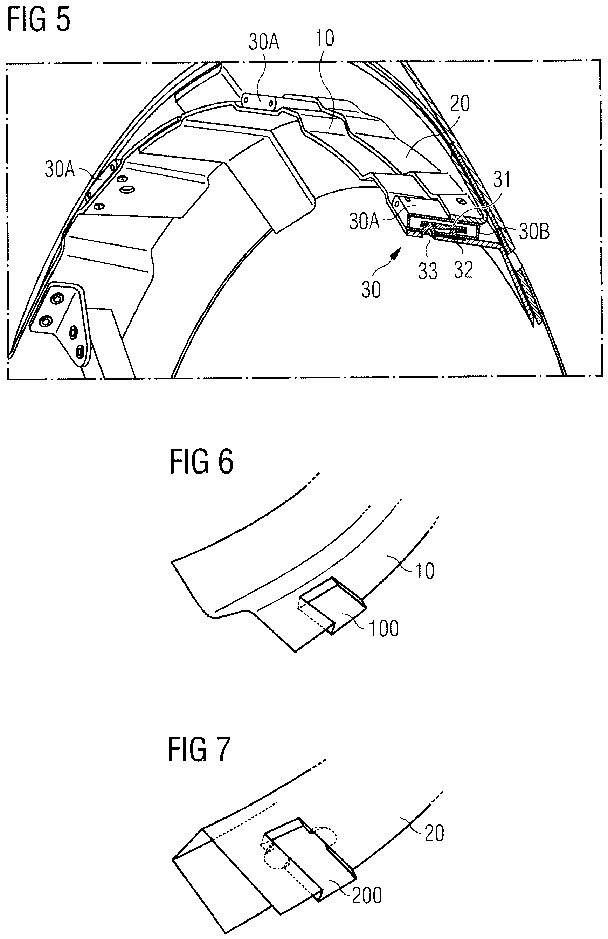

Fig 4 shows an embodiment of the inner collar 10, i.e. the collar or flange formed about the access hatch 1. The diagram indicates a possible complex shape of the inner collar 10, with raised and recessed portions that will provide a form-fit with a complementary inward-facing collar 20 (shown in Fig 3) formed about the access opening at the front of the hub. This diagram also shows a number of release mechanism parts 30 attached to the inner collar 10. Each release mechanism first part 30 has a latch hook 31 that will engage a pin of a release mechanism second part 30B. This is illustrated in Fig 5, which shows a cutaway view through the mated or locked inner and outer collars 10, 20. The diagram shows a number of two-part release mechanisms 30, one in cutaway view, showing a latch hook 31 of a first part 30A engaged with a pin 32 of a second part 30B. The diagram also indicates a hex socket 33. An Allen key can be inserted into the hex socket 33 and turned to either open the release mechanism or to close it.

Several such release mechanisms 30 are provided about the circumference of the access opening. While three can be sufficient to hold the removable access hatch 1 in place, it may be preferred to provide more, for example six, nine, or twelve such release mechanisms.

Figs 6 and 7 show an alternative realisation of a locking arrangement. Here, Fig 6 shows a section of the first annular collar 10 arranged about the removable access hatch 1. The diagram also shows a projecting structure 100 of the lock/release mechanism, shaped as a flat "foot". The projecting structure 100 has sloped side faces. Fig 7 shows a section of the second annular collar 20 arranged to face inwards to the interior cavity of the hub. This annular collar 20 can be part of the main body portion of the hub for attaching to the access hatch, or can be part of a two-part nose which is mounted to the main body portion of the hub. The diagram also shows a recess 200 of the lock/release mechanism, shaped with slanted side faces to accommodate the projecting structure 100 of the first annular collar 10 of Fig 6. This second collar 20 is shaped to lie against the first collar 10 when the foot rests inside the shoe. The "foot" may be regarded as a male part of a form-fit connection, while the "shoe" may be regarded as a female part.

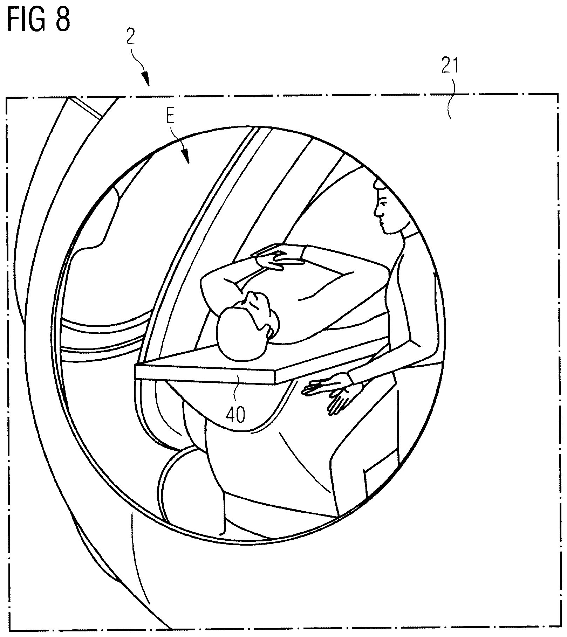

Fig 8 shows a stage during a rescue procedure. An injured person has been placed on a stretcher 4 which can be moved through the access opening E. A hoist rope (not shown) may be assumed to be connected to the stretcher 4, and a winch (not shown) is provided in the hub interior to lower the stretcher 40 to a level below the hub 2.

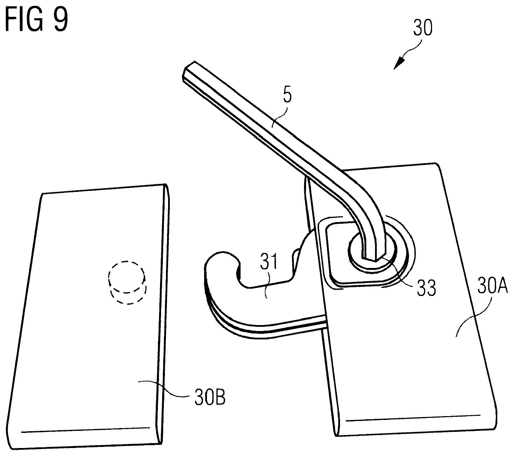

Fig 9 shows a release mechanism 30 as used in the embodiment described in Figs 4 and 5. The diagram shows the two-part release mechanism 30 comprising a first part 30A and a second part 30B. Each of these can be bolted riveted or otherwise fastened to the inner collar 10 and outer collar 20 respectively. The diagram also shows a moveable hook 31 which is shaped to engage with a pin positioned inside the second part 30B. To move the hook 31, a hex socket 33 is provided. An Allen key 5 is used to rotate the hex socket in one direction to release the hook 31 from the pin, or to rotate the hex socket in the opposite direction to engage the hook 31 with the pin.

Although the present invention has been disclosed in the form of preferred embodiments and variations thereon, it will be understood that numerous additional modifications and variations could be made thereto without departing from the scope of the invention as defined by the appended claims.

For the sake of clarity, it is to be understood that the use of "a" or "an" throughout this application does not exclude a plurality, and "comprising" does not exclude other steps or elements.

## Claims

1. A wind turbine hub (2) comprising at least
- a main body portion (21) realised for connection to a plurality of rotor blades (3), and comprising an interior cavity (210) dimensioned to accommodate service personnel (P) ;
- a removable access hatch (1) arranged at the front of the hub (2);
- a locking arrangement (10, 20, 30) realised to lock the access hatch (1) in place and to release the access hatch (1) from its locked state to expose an access opening (E) at the front of the hub (2), the locking arrangement (10, 20, 30) comprises: a first annular structure (10) arranged about the access hatch (1), a second annular structure (20) arranged on the main body portion (21), and a number of two-part locking devices (30), wherein the first part (30A) of a locking device (30) is mounted to the first annular structure (10) and wherein the second part (30B) of the locking device (30) is mounted to the second annular structure (20), and wherein a two-part locking device (30) comprises a release mechanism (31, 32, 33) that can be opened to release the first part (30A) from the second part (30B) or closed to lock the first part (30A) to the second part (30B); and wherein the access hatch (1) and locking arrangement (10, 20, 30) are constructed to allow the released access hatch (1) to be detached and moved only into the interior cavity (210) of the main body portion (21).

2. A wind turbine hub according to claim 1, wherein the removable access hatch (1) is realised as the foremost portion of the wind turbine hub (2).

3. A wind turbine hub according to claim 1 or claim 2, wherein the locking arrangement (10, 20, 30) is accessible from the interior cavity (210).

4. A wind turbine hub according to any of the preceding claims, wherein each annular structure (10, 20) comprises an outer diameter and a smaller inner diameter, and wherein the outer diameter (D₁₀) of the first annular structure (10) exceeds the diameter (D_{E}) of the access opening (E).

5. A wind turbine hub according to any of the preceding claims, wherein the release mechanism comprises a hook (31) arranged in the first part (30A) to engage a pin (32) arranged in the second part (30B).

6. A wind turbine hub according to any of the preceding claims, wherein the release mechanism is constructed to be actuated by an Allen key (5).

7. A wind turbine hub according to any of the preceding claims, wherein the locking arrangement comprises at least three, more preferably at least six, locking devices (30) arranged equidistantly about the access hatch (1).

8. A wind turbine hub according to any of the preceding claims, wherein the diameter (D_{E}) of the access opening (E) is at least 0.5 m, more preferably at least 0.6 m.

9. A wind turbine hub according to any of the preceding claims, further comprising an annular adapter (11) realised for mounting between the access hatch (1) and the main body portion (21), which annular adapter (11) comprises elements (20, 200) of the locking arrangement.

10. A wind turbine hub according to any of the preceding claims, adapted to accommodate a rescue assembly, which rescue assembly comprises
- a means of securing a stretcher (4) being moved through the access opening (E);
- a hoist rope for connection to the stretcher (4); and
- a winch configured to lower the stretcher (4) to a level below the hub (2).

11. A method of operating an access hatch (1) of a wind turbine hub (2) according to any of claims 1 to 10, comprising the steps of
- opening the locking arrangement (10, 20, 30) to release the access hatch (1) from its locked state to expose an access opening (E) at the front of the hub (2), and subsequently moving the released access hatch (1) into the interior cavity (210) of the main body portion (21); or
- positioning the access hatch (1) to close the access opening (E) at the front of the hub (2) and subsequently closing the locking arrangement (10, 20, 30) to lock the access hatch (1) in place on the hub (2).

12. A method according to claim 11, wherein the step of opening and closing the locking arrangement (10, 20, 30) are performed with a hand-held Allen key (5).

13. A wind turbine comprising an aerodynamic rotor (2, 3), which aerodynamic rotor comprises a number of rotor blades (3) mounted to a hub (2) according to any of claims 1 to 10.

## Patentansprüche

1. Windturbinennabe (2), umfassend mindestens:
- einen Hauptkörperabschnitt (21), der zur Verbindung mit mehreren Rotorblättern (3) ausgeführt ist und einen inneren Hohlraum (210) umfasst, der zur Unterbringung von Wartungspersonal (P) dimensioniert ist;
- eine entfernbare Zugangsluke (1), die am vorderen Ende der Nabe (2) angeordnet ist;
- eine Verriegelungsanordnung (10, 20, 30), die zum Verriegeln der Zugangsluke (1) in Position und zum Freigeben der Zugangsluke (1) aus ihrem verriegelten Zustand zum Freilegen einer Zugangsöffnung (E) am vorderen Ende der Nabe (2) ausgeführt ist, wobei die Verriegelungsanordnung (10, 20, 30) Folgendes umfasst: eine erste ringförmige Struktur (10), die um die Zugangsluke (1) angeordnet ist, eine zweite ringförmige Struktur (20), die am Hauptkörperabschnitt (21) angeordnet ist, und eine Anzahl von zweiteiligen Verriegelungsvorrichtungen (30), wobei der erste Teil (30A) der Verriegelungsvorrichtung (30), an der erste ringförmigen Struktur (10) angebracht ist, und wobei der zweite Teil (30B) der Verriegelungsvorrichtung (30) an der zweiten ringförmigen Struktur (20) angebracht ist, und wobei eine zweiteilige Verriegelungsvorrichtung (30) einen Freigabemechanismus (31, 32, 33) umfasst, der geöffnet werden kann, um den ersten Teil (30A) von dem zweiten Teil (30B) zu lösen, oder geschlossen werden kann, um den ersten Teil (30A) mit dem zweiten Teil (30B) zu verriegeln; und wobei die Zugangsluke (1) und die Verriegelungsanordnung (10, 20, 30) dazu ausgebildet sind, zu gestatten, dass die freigegebene Zugangsluke (1) abgenommen und nur in den inneren Hohlraum (210) des Hauptkörperabschnitts (21) bewegt wird.

2. Windturbinennabe nach Anspruch 1, wobei die entfernbare Zugangsluke (1) als der vorderste Abschnitt der Windturbinennabe (2) ausgeführt ist.

3. Windturbinennabe nach Anspruch 1 oder Anspruch 2, wobei die Verriegelungsanordnung (10, 20, 30) vom inneren Hohlraum (210) aus zugänglich ist.

4. Windturbinennabe nach einem der vorhergehenden Ansprüche, wobei jede ringförmige Struktur (10, 20) einen Außendurchmesser und einen kleineren Innendurchmesser umfasst, und wobei der Außendurchmesser (D₁₀) der ersten ringförmigen Struktur (10) den Durchmesser (D_{E}) der Zugangsöffnung (E) übersteigt.

5. Windturbinennabe nach einem der vorhergehenden Ansprüche, wobei der Freigabemechanismus einen Haken (31) umfasst, der in dem ersten Teil (30A) angeordnet ist, um einen Stift (32), der in dem zweiten Teil (30B) angeordnet ist, in Eingriff zu nehmen.

6. Windturbinennabe nach einem der vorhergehenden Ansprüche, wobei der Freigabemechanismus dazu ausgebildet ist, durch einen Inbusschlüssel (5) betätigt zu werden.

7. Windturbinennabe nach einem der vorhergehenden Ansprüche, wobei die Verriegelungsanordnung mindestens drei, vorzugsweise mindestens sechs, Verriegelungsvorrichtungen (30) umfasst, die äquidistant um die Zugangsluke (1) angeordnet sind.

8. Windturbinennabe nach einem der vorhergehenden Ansprüche, wobei der Durchmesser (D_{E}) der Zugangsöffnung (E) mindestens 0,5 m, vorzugsweise mindestens 0,6 m, beträgt.

9. Windturbinennabe nach einem der vorhergehenden Ansprüche, ferner umfassend einen ringförmigen Adapter (11), der zur Anbringung zwischen der Zugangsluke (1) und dem Hauptkörperabschnitt (21) ausgeführt ist, wobei der ringförmige Adapter (11) Elemente (20, 200) der Verriegelungsanordnung umfasst.

10. Windturbinennabe nach einem der vorhergehenden Ansprüche, der dazu ausgeführt ist, eine Rettungsanordnung aufzunehmen, wobei die Rettungsanordnung Folgendes umfasst:
- ein Mittel zum Sichern einer Trage (4), die durch die Zugangsöffnung (E) bewegt wird;
- ein Hubseil zur Verbindung mit der Trage (4); und
- eine Winde, die dazu ausgelegt ist, die Trage (4) auf eine Höhe unter der Nabe (2) abzusenken.

11. Verfahren zum Betätigen einer Zugangsluke (1) einer Windturbinennabe (2) nach einem der Ansprüche 1 bis 10, das die folgenden Schritte umfasst:
- Öffnen der Verriegelungsanordnung (10, 20, 30) zur Freigabe der Zugangsluke (1) aus ihrem verriegelten Zustand, um eine Zugangsöffnung (E) am vorderen Ende der Nabe (2) freizulegen, und anschließend Bewegen der freigegebenen Zugangsluke (1) in den inneren Hohlraum (210) des Hauptkörperabschnitts (21); oder
- Positionieren der Zugangsluke (1) zum Schließen der Zugangsöffnung (E) am vorderen Ende der Nabe (2) und anschließend Schließen der Verriegelungsanordnung (10, 20, 30) zum Verriegeln der Zugangsluke (1) in Position an der Nabe (2).

12. Verfahren nach Anspruch 11, wobei der Schritt des Öffnens und Schließens der Verriegelungsanordnung (10, 20, 30) mit einem handgeführten Inbusschlüssel (5) durchgeführt wird.

13. Windturbine, die einen aerodynamischen Rotor (2, 3) umfasst, wobei der aerodynamische Rotor eine Anzahl von Rotorblättern (3) umfasst, die an einer Nabe (2) nach einem der Ansprüche 1 bis 10 angebracht sind.

## Revendications

1. Moyeu d'éolienne (2) qui comprend au moins :
- une portion principale (21) faisant office de corps à des fins de liaison à plusieurs pales de rotor (3), et qui comprend une cavité interne (210) dimensionnée pour héberger un personnel de service (P) ;
- une trappe d'accès amovible (1) disposée à l'avant du moyeu (2) ;
- un agencement de verrouillage (10, 20, 30) réalisé pour verrouiller la trappe d'accès (1) en place et pour libérer la trappe d'accès (1) de son état verrouillé dans le but d'exposer une ouverture d'accès (E) à l'avant du moyeu (2), l'agencement de verrouillage (10, 20, 30) comprenant : une première structure annulaire (10) disposée autour de la trappe d'accès (1), une seconde structure annulaire (20) disposée sur la portion principale (21) faisant office de corps, et un certain nombre de dispositifs de verrouillage (30) en deux parties ; dans lequel la première partie (30A) d'un dispositif de verrouillage (30) est montée sur la première structure annulaire (10) et dans lequel la seconde partie (30B) du dispositif de verrouillage (30) est montée sur la seconde structure annulaire (20) ; et dans lequel un dispositif de verrouillage (30) en deux parties comprend un mécanisme de libération (31, 32, 33) qui peut être ouvert pour libérer la première partie (30A) par rapport à la seconde partie (30B) ou qui peut être fermé pour verrouiller la première partie (30A) à la seconde partie (30B) ; et dans lequel la trappe d'accès (1) et l'agencement de verrouillage (10, 20, 30) sont conçus pour permettre à la trappe d'accès libérée (1) d'être détachée et déplacée uniquement à l'intérieur de la cavité interne (210) de la portion principale (21) faisant office de corps.

2. Moyeu d'éolienne selon la revendication 1, dans lequel la trappe d'accès amovible (1) est réalisée sous la forme de la portion située la plus à l'avant du moyeu d'éolienne (2).

3. Moyeu d'éolienne selon la revendication 1 ou la revendication 2, dans lequel l'agencement de verrouillage (10, 20, 30) est accessible à partir de la cavité interne (210).

4. Moyeu d'éolienne selon l'une quelconque des revendications précédentes, dans lequel chaque structure annulaire (10, 20) comprend un diamètre externe et un diamètre interne plus petit ; et dans lequel le diamètre externe (D₁₀) de la première structure annulaire (10) est supérieur au diamètre (D_{E}) de l'ouverture d'accès (E).

5. Moyeu d'éolienne selon l'une quelconque des revendications précédentes, dans lequel le mécanisme de libération comprend un crochet (31) qui est disposé dans la première partie (30A) afin d'entrer en contact avec un taquet (32) qui est disposé dans la seconde partie (30B).

6. Moyeu d'éolienne selon l'une quelconque des revendications précédentes, dans lequel le mécanisme de libération est conçu pour être actionné par une clé Allen (5).

7. Moyeu d'éolienne selon l'une quelconque des revendications précédentes, dans lequel l'agencement de verrouillage comprend au moins trois, de manière plus préférée au moins six, dispositifs de verrouillage (30) qui sont disposés de manière équidistante autour de la trappe d'accès (1).

8. Moyeu d'éolienne selon l'une quelconque des revendications précédentes, dans lequel le diamètre (D_{E}) de l'ouverture d'accès (E) est d'au moins 0,5 m, de manière plus préférée d'au moins 0,6 m.

9. Moyeu d'éolienne selon l'une quelconque des revendications précédentes, qui comprend en outre un adaptateur annulaire (11) réalisé à des fins de montage entre la trappe d'accès (1) et la portion principale (21) faisant office de corps, ledit adaptateur annulaire (11) comprenant des éléments (20, 200) de l'agencement de verrouillage.

10. Moyeu d'éolienne selon l'une quelconque des revendications précédentes, conçue pour accueillir un assemblage de sauvetage, ledit assemblage de sauvetage comprenant :
- un moyen de fixation d'une civière (4) que l'on fait passer à travers l'ouverture d'accès (E) ;
- un câble de levage destiné à être raccordé à la civière (4) ; et
- un treuil configuré pour abaisser la civière (4) jusqu'à un niveau situé en dessous du moyeu (2).

11. Procédé de mise en service d'une trappe d'accès (1) d'un moyeu d'éolienne (2) selon l'une quelconque des revendications 1 à 10, qui comprend les étapes dans lesquelles :
- on ouvre l'agencement de verrouillage (10, 20, 30) dans le but de libérer la trappe d'accès (1) à partir de son état verrouillé afin d'exposer une ouverture d'accès (E) à l'avant du moyeu (2), et on déplace ensuite la trappe d'accès libérée (1) jusqu'à l'intérieur de la cavité interne (210) de la portion principale (21) faisant office de corps ; ou
- on positionne la trappe d'accès (1) dans le but de fermer l'ouverture d'accès (E) à l'avant du moyeu (2), et on ferme ensuite l'agencement de verrouillage (10, 20, 30) dans le but de verrouiller la trappe d'accès (1) en place sur le moyeu (2).

12. Procédé selon la revendication 11, dans lequel on met en œuvre l'étape d'ouverture et de fermeture de l'agencement de verrouillage (10, 20, 30) avec une clé Allen (5) tenue en main.

13. Éolienne qui comprend un rotor aérodynamique (2, 3), ledit rotor aérodynamique comprenant un certain nombre de pales de rotor (3) montées sur un moyeu (2) selon l'une quelconque des revendications 1 à 10.
